Europäisches Patentamt

**European Patent Office**

Office européen des brevets

(19)

(11) Publication number: **0 171 271**
A2

(12)

# EUROPEAN PATENT APPLICATION

(21) Application number: **85305519.2**

(22) Date of filing: **02.08.85**

(51) Int. Cl.⁴: **G 02 B 6/38**

---

(30) Priority: **09.08.84 GB 8420206**

(43) Date of publication of application: **12.02.86**
Bulletin 86/7

(84) Designated Contracting States: **AT BE CH DE FR GB IT LI LU NL SE**

(71) Applicant: **PLESSEY OVERSEAS LIMITED, Vicarage Lane, Ilford Essex IGI 4AQ (GB)**

(72) Inventor: **Dakin, John Philip "Firview", Whinwhistle Road East Wellow, Romsey Hampshire (GB)**

(74) Representative: **Nicholson, Ronald, Intellectual Property Department The Plessey Company plc 2-60 Vicarage Lane, Ilford Essex IG1 4AQ (GB)**

---

(54) **Improvements relating to optical fibres.**

(57) A method of producing a partially reflective splice between two optical fibers for use for example in an optical fibre hydrophone as described in our U.K. patent application No. 8220793, comprising spacing opposed faces of the fibres apart by a predetermined distance and filling this space with a UV setting cement having deliberatly a different refractive index to the fibres. The refractive index may be determined by the addition to the cement of an organic refractive index modifying liquid such as di-iodomethane.

By suitable choice of spacing and refractive index the characteristics of a splice can be controlled to produce predetermined reflection.

EP 0 171 271 A2

## IMPROVEMENTS RELATING TO OPTICAL FIBRES

This invention relates to optical fibres and relates more specifically to the splicing of optical fibres.

The present invention is directed to the splicing of optical fibres to provide partially-reflective splices which may be utilised for example to constitute the "discontinuities" in an optical fibre acoustic wave sensor incorporated in the optical fibre hydrophone described in our co-pending Patent Application No. 8220793 (Publication No. 2126820A).

According to the present invention there is provided a method of producing a partially-reflective splice according to requirements between two optical fibres comprising the steps of aligning opposed end faces of two optical fibres and spacing the end faces apart by a predetermined distance and then allowing a viscous transparent material or paste between the spaced apart fibre end faces and having a different refractive index from the optical fibres to set to produce a splice between the optical fibres having the requisite partially-reflective characteristic.

The transparent viscous material referred to may comprise ultra-violet (U.V.) setting cement or clear epoxy resin or, alternatively, the material may comprise low melting point glass or plastics material, or a glass paste. (e.g.powdered glass suspended in a volatile liquid which is then fused to produce a vitreous cement to bond the fibres together on setting).

In the case where low melting point glass or plastics material or a glass paste is used, the ends of the two optical fibres to be spliced together are first dipped into the molten glass or plastics material or the glass paste after stripping back the usual primary sheathing applied over the cladding of the fibre. Then, during or after positioning of the end faces of the optical fibres heat may be applied to the splicing material in order to fuse the material after which the splicing material is allowed to cool and set between the fibre end faces.

Where the fibre splicing material is UV setting cement or clear epoxy resin, however, no heating is required. The cement or epoxy resin may simply be introduced in any convenient manner between the aligned spaced-apart end faces of the optical fibres and in the case of the UV setting cement subjected to ultra-violet light in order to effect the hardening thereof. In this case the primary sheathing of the fibre need not be stripped back.

In order to produce the requisite value of refractive index of the splice certain additives may be used in the splice material. For example, where UV setting cement is used an organic refractive index modifying liquid such as di-iodomethane may be introduced into the cement to raise the refractive index.

The spacing between the end faces of the optical fibres and thus the partially-reflective characteristic of the splice can be accurately predetermined by arranging that, as the end faces of the optical fibres are manipulated to vary the spacing between the opposed end faces after the splicing material has been introduced between the end faces but before the setting thereof, light pulses are transmitted along the optical fibre to the splice concerned and the reflected light pulses monitored using time domain reflectometry in order to measure the intensity of the reflected pulses and thus the reflective characteristic of the splice that has been formed. When the desired spacing between the end faces (e.g. $0.1 - 1\mu m$) has been achieved the splice material can then be allowed to set.

CLAIMS:

1.   A method of producing a partially-reflective splice according to requirements between two optical fibres comprising the steps of aligning opposed end faces of two optical fibres and spacing the end faces apart by a predetermined distance and then allowing a viscous transparent material or paste between the spaced apart fibre end faces and having a different refractive index from the optical fibres to set to produce a splice between the optical fibres having the requisite partiallyreflective characteristic.

2.   A method as claimed in claim 1, in which the transparent viscous material comprises ultra-violet setting cement or clear epoxy resin introduced between the end faces of the optical fibres where it hardens without the application of heat.

3.   A method as claimed in claim 1, in which the transparent viscous material comprises low melting point glass or plastics material or glass paste, and in which the ends of the fibres are dipped into the molten glass, plastics material or glass paste after which heat is applied to the splicing material to fuse it before allowing the splicing material to cool and set between the fibre end faces.

4.    A method as claimed in any preceding claim, in which additives are used in the splicing material to modify the refractive index according to requirements.

5.    A method as claimed in any preceding claim, in which the spacing between the end faces of the optical fibres separated by the viscous splicing material is monitored using light pulses and time domain reflectometry and is adjusted to provide the requisite reflective characteristic before the splicing material hardens.